# EUROPEAN PATENT APPLICATION

(11) **EP 3 534 499 A1**
(43) Date of publication of application: **04.09.2019**
(21) Application number: 18159514.1
(22) Date of filing: 01.03.2018
(51) Int. Cl.: H02K 3/18, H02K 7/18, H02K 21/22

(54) **CONCENTRATED WINDING STATOR ASSEMBLY WITH END WINDING PORTIONS HAVING DIFFERENT PROTRUSION LENGTHS**

(71) Applicant: Siemens Gamesa Renewable Energy A/S, 7330 Brande (DK)
(72) Inventor: Samanta, Subhra, 7430 Ikast (DK)
(74) Representative: Aspacher, Karl-Georg

(57) **Abstract**

It is described a stator assembly (110) for an electrical machine (100), which comprises (a) a stator yoke (212) with a plurality of stator teeth (212a) extending radially with respect to a center axis (190a) defining an axial direction (z) of the stator assembly and a plurality of stator slots (212b), wherein respectively two stator slots are located between two neighboring stator teeth; and (b) a plurality of stator coils (214) each comprising a plurality of stator windings (317, 417). (i) Respectively one stator coil is arranged around one single stator tooth and occupies two stator slots being adjacent to the one single stator tooth, (ii) each stator coil comprises two coil head portions (316, 416) which protrude from the stator yoke along the axial direction, (iii) each coil head portion comprises a plurality of end winding portions (318, 418), each end winding portion being assigned to one stator winding and protruding axially from the stator yoke by a certain protrusion length (la, lc, If), and (iv) the protrusion length of different end winding portions is different. Further described are an electrical machine and a wind turbine comprising such a stator assembly (110) and a method for manufacturing such a stator assembly (110) .

## Description

### Field of invention

The present invention relates to the technical field of electrical machines having a so-called concentrated winding design. In particular, the present invention relates to a stator assembly having stator coils which are realized with a concentrated winding design. Further, the present invention relates to an electrical machine with such a stator assembly and a wind turbine with such an electrical machine being used as electric generator. Furthermore, the present invention relates to a method for manufacturing such a stator assembly.

### Art Background

An electrical machine, such as a generator of a wind turbine, comprises a stator assembly and a rotor assembly. When rotating, electromagnets or permanent magnets of the rotor assembly generate a time varying magnetic flux, which is picked up by stator coils of the stator assembly.

The stator assembly comprises a stator yoke having a plurality of teeth, around which a plurality of stator coils are wound or coiled up. Thereby, the stator coils are predominantly located within slots, which are defined between respectively two neighboring teeth. Specifically, each stator coil is arranged within two slots. Portions of a stator coil which are not arranged within the two slots are so-called coil head portions comprising a plurality of end winding portions, wherein each end winding portion is assigned to one stator turn winding of the respective stator coil. Coil head portions do not make a contribution in "picking up magnetic flux". They are only needed to close the loop of the stator coil turns.

A stator assembly wherein one stator coil is arranged within two slots, which are separated from each other only via a single tooth, is called a concentrated winding stator assembly. In such a configuration one stator coil is wound around a single tooth only. By contrast thereto, a stator assembly in which each stator coil is wound around more than one tooth is called a distributed winding stator assembly.

The biggest advantage of a concentrated winding (or fractional slot winding) design is a reduction of the size of the coil head portions because a stator coil being assigned to one electric phase "starts" in one slot of the stator yoke, "leaves" the stator yoke respectively the slot with its coil head portion, and re-enters the stator yoke in the adjacent slot (on the other side of the respective tooth). By contrast thereto, in distributed winding the stator coil re-enters the stator yoke in a slot which is circumferentially spaced apart from the "starting" slot, whereby the circumferential spacing depends on a defined number of integer slot pitch.

In particular in a so call Direct Drive (DD) wind turbine, where there is no gear provided in the drive train mechanically connecting a wind rotor (including at least two blades) with a rotor assembly of an electric generator, the stator yoke (including its teeth) is quite long with respect to an axial direction of the electric generator. Hence, there is necessary a large amount of electrically conductive material (in particular copper) for forming the stator coils. In order to reduce the necessary amount of electrically conductive material one could try to reduce the size of the coil head portions. However, this is not very easy in practice because of (a) limited mechanical properties of the electrically conductive material and (b) mechanical constraints when imposing a properly preformed stator coil over a stator tooth. Specifically, due to the elastic deformability of the electrically conductive material there is always a so called coil spring back effect when forming the stators in a shape which is suitable for concentrated winding. Further, a small "material saving" stator coil must be comparatively narrow such that it is difficult to insert it into the intended slots. In particular, there is a high risk for damaging insulation material when the stator yoke, in particular the respective tooth, comes into a rough mechanical contact with the insulation material of the stator coil. A precise and easy to form geometry for coil head portions may be suitable for mitigating the problems elucidated above.

There may be a need for providing a stator assembly with stator coils having coil head portions which allow on the one hand to reduce the amount of electrically conductive material needed and on the other hand to facilitate a reliable and error free production of such (concentrated winding) stator assemblies.

### Summary of the Invention

This need may be met by the subject matter according to the independent claims. Advantageous embodiments of the present invention are described by the dependent claims.

According to a first aspect of the invention there is provided a stator assembly for an electrical machine, in particular for an electric generator and further in particular an electrical machine for a wind turbine. The provided stator assembly comprises (a) a stator yoke with (a1) a plurality of stator teeth extending radially with respect to a center axis defining an axial direction of the stator assembly and (a2) a plurality of stator slots, wherein respectively two stator slots are located between two (circumferentially) neighboring stator teeth; and (b) a plurality of stator coils each comprising a plurality of stator turns. In accordance with the invention (i) respectively one stator coil is arranged around one single stator tooth and occupies two stator slots being adjacent to the one single stator tooth, (ii) each stator coil comprises two coil head portions which protrude from the stator yoke along the axial direction, (iii) each coil head portion comprises a plurality of end winding portions, each end winding portion being assigned to one stator turn and protruding axially from the stator yoke by a certain protrusion length, and (iv) the protrusion length of different end winding portions is different.

The described stator assembly is based on the idea that by providing different protrusions length for different end winding portions of the stator turns appropriately and precisely formed coil head portions can be formed, e.g. by means of bending procedure, is a reliably manner. In particular, due to the different protrusion lengths different end winding portions may have a different bending characteristic respectively different curvatures. This has a very positive effect with regard to the spatial stability of the coil head portions in particular if they have been formed by a bending or forming procedure. Specifically, compared to coil head portions where all end winding portions have at least approximately the same protrusion length, a so called coil spring back effect will be significantly reduced. Therefore, the spatial respectively the geometric stability of the coil head portions, which have been formed by bending, will be increased. This of course has also a positive effect on the spatial stability of the entire stator coil. As a consequence, a correspondingly precisely shaped stator coil can be inserted into the designated stator slots easily and without having a risk for damaging in particular an insulation material of the stator coil

Further, the possibility to precisely shape in particular the coil head portions may allow to choose a geometry for the entire stator coils which, without making an insertion of the stator coils into the intended stator slots difficult and without increasing the risk for damaging a coil insulation, will require only a minimum amount of electrically conductive material (e.g. copper). Hence, the described stator assembly can be realized in an efficient manner (with respect to material costs) and with a comparatively small weight (with respect to weight of the coil head portions) of the stator coils.

The electric conductive material of the stator coil may be a metal material, in particular copper. The electric insulating material may be mica-glass tape or mica-polyester tape or any other form of traditional insulation material used as electrical machine main wall insulation.

In accordance with the described stator assembly respectively one stator coil is arranged around one single stator tooth. Hence, the described stator assembly is realized in the so called "concentrated winding design".

In the context of this document the term "each stator coil comprises two coil head portions which protrude from the stator yoke along the axial direction" may particularly mean that one coil head portion protrudes axially from a first surface of the stator yoke and the other coil head portion (of the same stator coil) protrudes axially from an opposing second surface of the stator yoke.

Further, in this document the term "each end winding portion being assigned to one stator turn" may particularly mean that each (stator) turn has two end winding portions. One of the two end winding portions is assigned to one of the two coil head portions whereas the other one of the two end winding portions is assigned to the other one of the two coil head portions. Each coil will have two end winding. It is obvious.

The described stator yoke may be formed from a lamination stack of magnetic material wherein each lamination layer is made from a single piece fully surrounding a rotational axis of the stator assembly (corresponding to the rotational axis of a rotor assembly, which together with the stator assembly forms an electrical machine, in particular an electric generator for a wind turbine). Alternatively, the stator yoke may be realized by assembling together at least two stator yoke segments, wherein each stator yoke segment comprises a lamination stack of correspondingly smaller pieces of magnetic material and occupies only a portion of the entire stator yoke circumference.

According to an embodiment of the invention, with respect to the center axis, a radial outer end winding portion has a larger protrusion length than a radial inner end winding portion. This may particularly mean that when "moving" radially outwards from the center axis the protrusion length increases.

The described "radial increase" of the protrusion length may provide the advantage that spatial constraints (i) with respect to a frame structure of the described stator assembly and/or (ii) given within a housing of an electrical machine comprising the described stator assembly and a corresponding rotor assembly can be met easily.

According to a further embodiment of the invention within a first radial region given by a first inner radius and a first outer radius each radial outer end winding portion has a larger or at least the same protrusion length than the radially neighboring radial inner end winding portion. This may particularly mean that within the first radial region there is given a continuously increasing protrusion length when "travelling" radially outwards. Further, it may also be possible that two radial neighboring stator turns have end winding portions with the same protrusion length.

The spatial configuration of the coil head portion according to this embodiment may provide the advantage that the "overhang" of the respective coil head portion will be comparatively smooth, i.e. there will not be an outer "zigzag" shape with regard to the radial dependency of the protrusion lengths. Such a comparatively smooth spatial design of the respective coil head portion may provide in particular the advantage of an easy and reliable manufacture.

According to a further embodiment of the invention, with respect to the center axis, a radial outer end winding portion has a smaller protrusion length than a radial inner end winding portion. This may particularly mean that when "moving" radially outwards from the center axis the protrusion length decreases.

The described "radial decrease" of the protrusion length may provide the advantage that for outer end winding portions, wherein due to an angular spread (caused by an at least approximate cylinder symmetry of the stator yoke) the width of a stator tooth (measured along the circumferential direction) increases. Therefore, with regard to the efficiency to save material and weight for a coil head portion it may be of advantage if the radial outer end winding protrusions have a smaller protrusion length than the radial inner protrusion length.

According to a further embodiment of the invention within a second radial region given by a second inner radius and a second outer radius each radial outer end winding portion has a smaller or at maximum the same protrusion length than the radially neighboring radial inner end winding portion.

This means that within the second radial region there is given a continuously decreasing protrusion length when "travelling" radial outwards. Further, it may also be possible that two radially neighboring stator turns have end winding portions with the same protrusion length. Also this spatial configuration of a coil head portion may provide the advantage that the "overhang" of the respective coil head portion will be comparatively smooth. With regard to the issue of manufacture the stator coils the same advantages may apply which have been described above with respect to the embodiment where there is given a continuously decreasing or constant protrusion length when "travelling" radial outwards.

According to a further embodiment of the invention the first radial region or the second radial region corresponds to the entire radial extension of the coil head portion (respectively the entire stator coil). This may mean that for the entire coil head portion along the radial direction starting from the center axis there is given a continuous increase or at least a constant course of the protrusion lengths of different end winding portions. Alternatively, there is given a continuous decrease or at maximum a constant course of the protrusion lengths of different end winding portions. In both cases the spatial design of the respective coil head portion can be kept simple which facilitates the production of the stator coils.

According to a further embodiment of the invention the first radial region extends from a radial most inner end winding portion to a radial intermediate end winding portion. Alternatively or in combination the second radial region extends from a radial intermediate end winding portion to a radial most outer end winding portion. This may mean that the protrusion length of at least one end winding porting being located in the (radial) middle or at least in a (radial) middle region of the stator coil is larger than the protrusion lengths of the other end winding porting being located radially inward or radially outward from the (at least one) radial intermediate end winding portion. In other words, according to this embodiment the maximum protrusion length is assigned to an end winding portion which is radially arranged in a region in the middle between the radially most inner end winding portion and the radially outermost end winding portion. For the sake of clarity, all radial distances are again given with reference to the center axis.

Also this embodiment may provide the advantage that it has a comparatively easy design which facilitates fabrication not only of the stator coils but also of the entire stator assembly.

According to a further aspect of the invention there is provided an electrical machine, which in particular is realized as an electric generator, e.g. for a wind turbine. The provided electrical machine comprises (a) a stator assembly as described above and (b) a rotor assembly being rotatably supported at the stator assembly.

The rotor assembly may comprise permanent magnets. In case of a generator these magnets, when rotating around a rotational axis of the electrical machine, generate a time varying magnetic flux trough the stator coils.

According to an embodiment of the invention the rotor assembly is located radially outward from the stator assembly. This means that the described electrical machine is designed in a so-called inner stator - outer rotor configuration, which in particular when being used as a large generator within a nacelle of a wind turbine, exhibits several advantages as compared to a generator being realized in an outer stator - inner rotor configuration.

According to a further aspect of the invention there is provided a wind turbine for generating electrical power. The provided the wind turbine comprises (a) a tower; (b) a wind rotor, which is arranged at a top portion of the tower and which comprises at least one blade; and (c) an electrical machine as described above and configured as an electric generator, which is mechanically coupled with the wind rotor.

The described wind turbine may be configured for being operated on-shore or off-shore. The wind turbine may comprise a gear being a part of a so-called drive train, which mechanically connects the wind rotor with the electric generator. Preferably, the wind turbine is a so-called direct drive (DD) wind turbine, which does not comprise such a gear being connected between wind rotor and rotor assembly of the electric generator.

According to a further aspect of the invention there is provided a method for manufacturing a stator assembly as described above. The provided method comprises (a) providing the stator yoke and (b) mounting the plurality of stator coils to the stator yoke in such a manner that each stator coil is arranged around one single stator tooth and occupies the two stator slots being adjacent to the one single stator tooth.

Also the described manufacturing method is based on the idea that stator coils with end winding portions having different protrusion lengths facilitate the fabrication of the stator coils itself because mechanical tensions can be reduced, which may occur when subjecting the stator head portions respectively the different end winding portions to a bending procedure. This may allow to produce the entire stator coils with a high (geometric) precision and with small bending radii. These advantageous effects may be used for reducing the amount of conductive material being used for realizing the stator coils. Further, a precise spatial geometry facilitates an insertion of the stator coils into the designated slots and reduces the risk of mechanical damages in particular of insulation material.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

- Figure 1: shows a wind turbine comprising an electric generator in accordance with an embodiment of the invention.
- Figure 2: shows an enlarged cross sectional view of the stator assembly and the rotor assembly of the generator 12 of a first embodiment of the electric generator of the wind turbine of Figure 1.
- Figures 3 and 4: show in two different views a coil head portion according a first embodiment of the invention.
- Figures 5 and 6: show in two different views a coil head portion according a second embodiment of the invention.

### Detailed Description

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

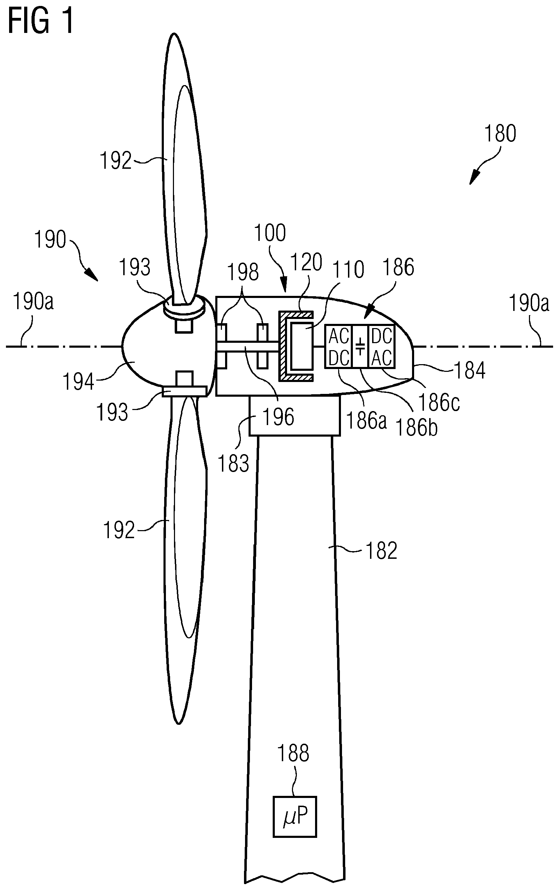

Figure 1 shows a wind turbine 180 comprising a tower 182, which is mounted on a non-depicted fundament. On top of the tower 182 there is arranged a nacelle 184. In between the tower 182 and the nacelle 184 there is provided a yaw angle adjustment device 183 which in a known manner can be controlled for "yawing" the nacelle 184 in order to align it with the current wind direction.

The wind turbine 180 further comprises a wind rotor 190 having three blades 192. In the perspective of Figure 1 only two blades 192 are visible. The wind rotor 190 is rotatable around a rotational axis 190a. The blades 192, which are mounted at a hub 194, extend radially with respect to the rotational axis 190a.

In between the hub 194 and each one of the blades 192 there is respectively provided a blade adjustment device 193 in order to adjust the blade pitch angle of each blade 192 by rotating the respective blade 192 around a not depicted axis being aligned substantially parallel with the longitudinal extension of the blade 192. By controlling the blade adjustment device 193 the blade pitch angle of the respective blade 192 can be adjusted in such a manner that, at least when the wind is not so strong, a maximum wind power can be retrieved from the presently available wind power. However, the blade pitch angle can also be intentionally adjusted to a position, in which only a reduced wind power can be captured.

Within the nacelle 184 there is provided an electric generator 100. In accordance with basic principles of electrical engineering the electric generator 100 comprises a stator assembly 110 and a rotor assembly 120. According to the embodiment described here the electric generator 100 is realized with a so called inner stator - outer rotor configuration. Permanent magnets being attached to the rotor assembly 120 travel around stator segments being attached at the stator assembly 110. In between the stator segments, which comprise stator coils for picking up a time alternating magnetic induction, and the permanent magnets, there is formed an air gap. The stator assembly 110 is realized in the concentrated winding design. Further details about "concentrated winding" are given below.

The wind rotor 190 is rotationally coupled with the rotor assembly 110 by means of drive train realizes as a rotatable shaft 196. A schematically depicted bearing assembly 198 is provided in order to hold in place both the wind rotor 190 and the rotor assembly 120. As can be seen from Figure 1, the shaft 196 extends along the rotational axis 190a. The rotational axis 190a is identic with a center axis of the stator assembly 110.

It is mentioned that the wind turbine 180 illustrated in Figure 1 is a so-called direct drive (DD) wind turbine, wherein between wind rotor 190 and rotor assembly 110 there is no gear box. However, it is mentioned that the electric generator 100 could also be driven indirectly via a gear box, which may be used to convert the number of revolutions of the wind rotor 190 typically into a higher number of revolutions of the rotor assembly 120.

In order to provide an AC power signal being synchronized with a power signal of a utility grid the electric output of the stator assembly 110 is electrically connected to a power converter 186. The power converter 186 comprises a generator side AC-DC converter 186a, an intermediate DC bridge 186b, and a grid side DC-AC converter 186c. The AC-DC converter 186a and the DC-AC converter 196c comprise several not depicted high power semiconductor switches, which in a known manner are arranged in a bridge configuration for each phase of an AC current provided by the electric generator 100.

The wind turbine 180 further comprises a control system 188 for operating the wind turbine 100 in a highly efficient manner. Apart from controlling for instance the yaw angle adjustment device 183 the depicted control system 188 is also used for adjusting the blade pitch angle of the blades 192 of the wind rotor 190 in an optimized manner.

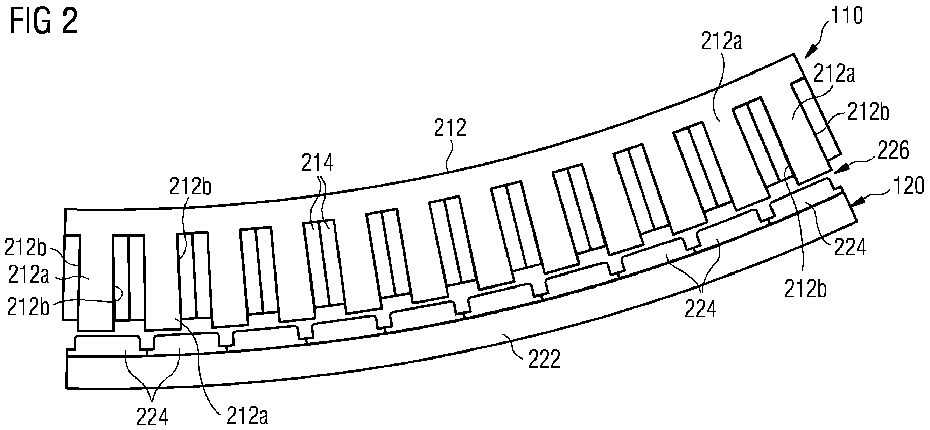

Figure 2 shows an enlarged cross sectional view of the stator assembly 110 and the rotor assembly 120 of the generator 100, which is depicted schematically in Figure 1. The stator assembly 110 comprises a stator frame structure, which itself includes a stator yoke 212 and a plurality of stator teeth 212a. Due to the inner stator - outer rotor configuration the stator teeth 212a are directed radially outward from a center axis, which in Figure 1 is denominated with reference numeral 190a. In between two neighboring teeth 212a there are formed recesses. According to the nomenclature used here one recess corresponds to two neighboring slots 212b (in between two neighboring teeth 212a). Respectively two slots 212b are adjacent to one tooth 212a. This means that one recess is "occupied" by two slots 212b, wherein each slot 212b is assigned to one stator tooth 212a. Further, in accordance with the concept of concentrated winding two slots 212b being adjacent to one tooth 212a are occupied by exactly one stator coil 214. In accordance with basic electric principles of an electric generator the stator coils 214 are subdivided into different groups of stator coils 214, wherein each group is assigned to one electric phase. A corresponding electric circuitry for such a "stator coil grouping" is not depicted in Figure 2 in order to not to obscure an understanding of this description.

The rotor assembly 120, which is radially external with respect the stator assembly 110 and which is rotatable about the center axis 190a (see Figure 1), comprises a rotor frame structure 222 and a plurality of permanent magnets 224. These permanent magnets 224 are attached to an inner side of the rotor frame structure 222, the inner side of which faces the stator assembly 110. A circumferential air gap 226 is provided between the stator assembly 110 and the rotor assembly 120.

Each one of the stator teeth 212a has a length, which is measured along a direction being perpendicular to the plane of drawing of Figure 2. This direction is the axial direction defining the center axis of e.g. the stator assembly 110. The width of each stator tooth 212a is measured along the circumferential direction (around the center axis). The circumferential direction is within the plane of drawing of Figure 2. It is obvious that in order to complete a stator coil 214 around a stator tooth 212a it is necessary to provide so called end winding portions or coil heads are not located within the respective slot. A not depicted front end winding portion or front coil head of the stator coils 214 protrudes out from the plane of drawing of Figure 2.

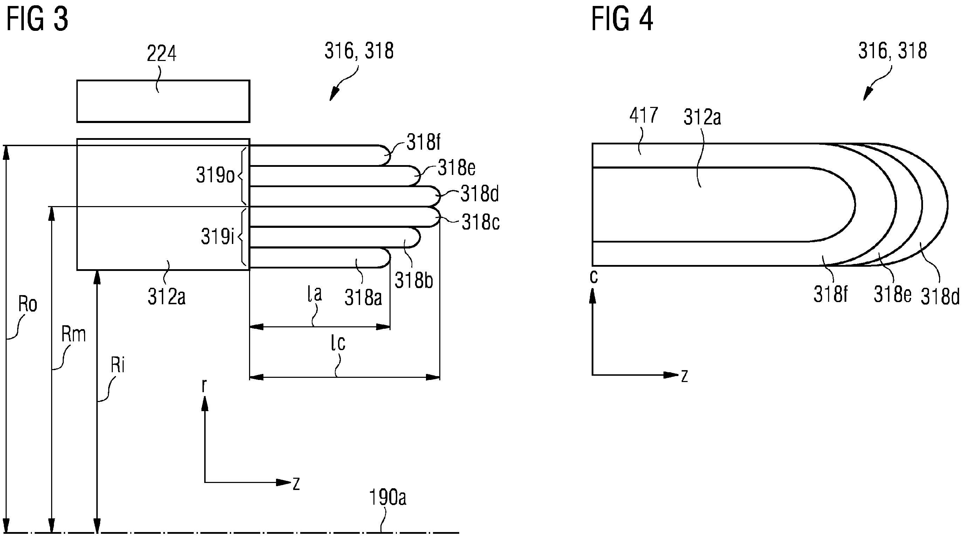

Figures 3 and 4 show a coil head portion 316 in accordance with an embodiment of the invention. Figure 3 has a plane of drawing which is defined by (a) an axial direction z corresponding to center axis 190a and (b) the radial direction r. Figure 4 has a plane of drawing which is defined by (a) the axial direction z and (b) the circumferential direction c. In order to facilitate an understanding of the geometric perspective a permanent magnet 224 is depicted in Figure 3. During operation of the not fully depicted corresponding electrical machine this permanent magnet 224 circulates around the center axis 190a.

The coil head portion 316 protrudes from the stator yoke along the axial direction z. A stator tooth of the stator yoke is depicted in both Figures 3 and 4 and is denominated with reference numeral 312a. The coil head portion 316 comprises a plurality of end winding portions 318, wherein one end winding portion 318 is assigned to one stator turn 317, which encompasses respectively surrounds the stator tooth 312a.

Typically, a stator coil has a plurality of turns, e.g. 20 to 40. As a consequence, also the coil head portion 316 has a plurality of end winding portions 318, the number of which is the same as the number of turns 317. For the sake of an easy illustration only a reduced number of turns is shown in the Figures. Specifically, the embodiment show in Figure 3 is illustrated with six turns 317 respectively six end winding portions 318a, 318b, 318c, 318d, 318e, and 318f.

It is pointed out that when there is a high number of turns (e.g. more than 20) it is possible to use a winding design where several end winding portions have the same protrusion length.

As can be seen from Figure 3, which is a cross sectional view, different end winding portions 318 have different protrusion lengths. In Figure 3, the radial most inner end winding portion 318a and the radial most outer end winding portion 318f have the shortest protrusion length la. The two radial inner or intermediate end winding portions 318c and 318d have the longest protrusion length lc. Further, the second end winding portion 318b and the fifth end winding portion 318e have each a protrusion length which is in between the protrusion lengths la and lc.

Generally speaking, the radial dimension of the coil head portion 316 is divided into a first inner radial region 319i and a second outer radial region 319o. The first inner radial region 319i extends from an inner radius Ri to a middle or intermediate radius Rm. The second outer radial region 319o extends from the middle or intermediate radius Rm to an outer radius Ro. Within the inner radial region 319i the protrusion lengths increase when moving away from the center axis 190a. Within the outer radial region 319o the protrusion lengths decrease when moving (further) away from the center axis 190a.

In should be clear that in the top view of the coil head portion 316 in a direction towards the center axis 190a (see Figure 4) only three end winding portions, namely the end winding portions 318d, 318e, and 318f, can be seen. The end winding portions 318c, 318b, and 318a are "shadowed" by the end winding portion 318d having the largest protrusion length.

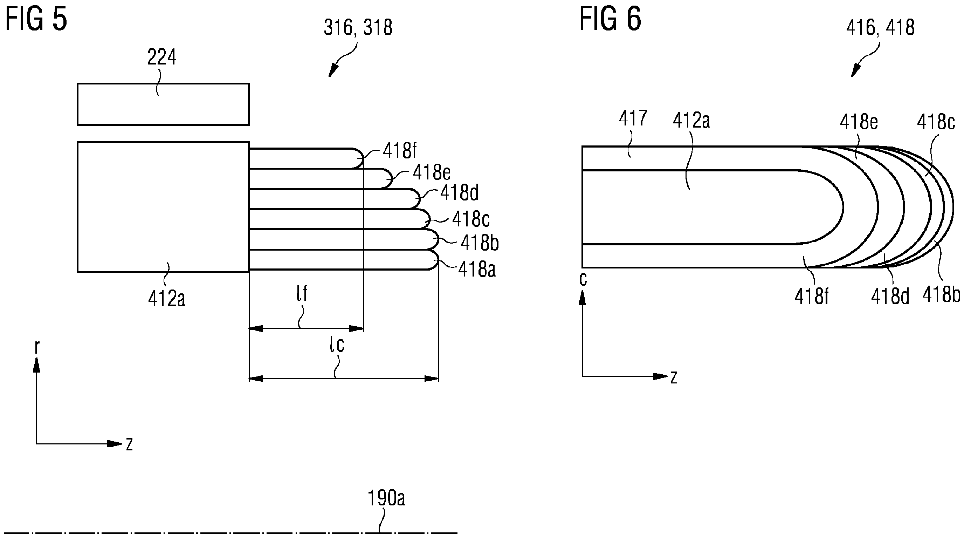

Figures 5 and 6 show a coil head portion 416 in accordance with a further embodiment of the invention. The two views of Figure 5 and Figure 6 correspond to the views of Figure 3 and Figure 4, respectively.

The coils head portion 416, which extends axially from a stator tooth 412a, comprises also a plurality of end winding portions 418. Each end winding portion 418 corresponds to one stator turn 417. For the sake of clarity of the illustration again only six end winding portions 418a, 418b, 418c, 418d, 418e, and 418f are shown. As can best be taken from Figure 5, a protrusion length of the end winding portions 418 decreases when radially "moving away" from the center axis 190a. Specifically, the radial most inner end winding portion 418a and the neighboring end winding portion 418b have the longest protrusion length, which in Figure 5 is denominated with reference numeral la. The radial most outer end winding portion 418f has the shortest protrusion length, which in Figure 5 it is denominated with reference numeral lf.

Due to the decreasing protrusion length of the end winding portions 418, when "moving" radially inwards, i.e. towards the center axis 190a, altogether five end winding portions 418f, 418e, 418d, 418c, 418b, and 418a can be seen in the top view of Figure 6.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A stator assembly (110) for an electrical machine (100), in particular for an electric generator (100) and further in particular an electric generator (100) for a wind turbine (180), the stator assembly (110) comprising
a stator yoke (212) with
a plurality of stator teeth (212a) extending radially with respect to a center axis (190a) defining an axial direction (z) of the stator assembly (110) and
a plurality of stator slots (212b), wherein respectively two stator slots (212b) are located between two neighboring stator teeth (212a); and
a plurality of stator coils (214) each comprising a plurality of stator turns (317, 417); wherein
(i) respectively one stator coil (214) is arranged around one single stator tooth (212a) and occupies two stator slots (212b) being adjacent to the one single stator tooth (212a),
(ii) each stator coil comprises two coil head portions (316, 416) which protrude from the stator yoke (212) along the axial direction (z),
(iii) each coil head portion (316, 416) comprises a plurality of end winding portions (318, 418), each end winding portion (318, 418) being assigned to one stator turn (317, 417) and protruding axially from the stator yoke (212) by a certain protrusion length (la, lc, lf), and
(iv) the protrusion length (la, lc, lf) of different end winding portions (318, 418) is different.

2. The stator assembly (110) as set forth in the preceding claim, wherein
with respect to the center axis (190a) a radial outer end winding portion (318c) has a larger protrusion length (lc) than a radial inner end winding portion (318a).

3. The stator assembly (110) as set forth in the preceding claim, wherein
within a first radial region (319i) given by a first inner radius (Ri) and a first outer radius (Rm) each radial outer end winding portion (318c) has a larger or at least the same protrusion length (lc) than the radially neighboring radial inner end winding portion (318b).

4. The stator assembly (110) as set forth in any one the preceding claim, wherein
with respect to the center axis (190a) a radial outer end winding portion (418f) has a smaller protrusion length (lf) than a radial inner end winding portion (418a).

5. The stator assembly (110) as set forth in the preceding claim, wherein
within a second radial region (319o) given by a second inner radius (Rm) and a second outer radius (Ro) each radial outer end winding portion (318f) has a smaller or at maximum the same protrusion length (la) than the radially neighboring radial inner end winding portion (318e).

6. The stator assembly as set forth in claim 3 or claim 5, wherein
the first radial region or the second radial region corresponds to the entire radial extension of the coil head portion (416).

7. The stator assembly as set forth in the preceding claim 5, when depending on claim 3, wherein
the first radial region (319i) extends from a radial most inner end winding portion (318a) to a radial intermediate end winding portion (318c, 318d) and/or the second radial region (319o) extends from a radial intermediate end winding portion (318c, 318d) to a radial most outer end winding portion (318f).

8. Electrical machine (100), in particular an electric generator (100), the electrical machine (100) comprising
a stator assembly (110) as set forth in the preceding claim; and
a rotor assembly (120) being rotatably supported at the stator assembly (110).

9. Electrical machine (100) as set forth in the preceding claim, wherein the rotor assembly (120) is located radially outward from the stator assembly (110).

10. Wind turbine (180) for generating electrical power, the wind turbine (180) comprising
a tower (182);
a wind rotor (190), which is arranged at a top portion of the tower (182) and which comprises at least one blade (192); and
an electrical machine (100) as set forth in the preceding claim and configured as an electric generator (100), which is mechanically coupled with the wind rotor (190).

11. Method for manufacturing a stator assembly (110) as set forth in any one of the preceding claims 1 to 7, the method comprising
providing the stator yoke (212); and
mounting the plurality of stator coils (214) to the stator yoke (212) such that each stator coil (214) is arranged around one single stator tooth (212a) and occupies the two stator slots (212b) being adjacent to the one single stator tooth (212a).
